# EUROPÄISCHE PATENTSCHRIFT

(11) **EP 0 357 021 B1**
(45) Veröffentlichungstag und Bekanntmachung des Hinweises auf die Patenterteilung: **10.11.1993**
(21) Anmeldenummer: 89115985.7
(22) Anmeldetag: 30.08.1989
(51) Int. Cl.: C08J 9/28, B01D 67/00

(54) **Verfahren zur Herstellung von Membranen**
Membrane manufacturing process
Procédé de fabrication de membranes

(30) Priorität: 01.09.1988 DE 3829766
(43) Veröffentlichungstag der Anmeldung: 07.03.1990
(73) Patentinhaber: Akzo Nobel N.V., 6824 BM Arnhem (NL)
(72) Erfinder: Müller, Heinz-Joachim, Dr., D-8767 Wörth (DE); Wechs, Friedbert, D-8767 Wörth (DE)
(74) Vertreter: Fett, Günter

(56) Entgegenhaltungen:
- EP-A- 0 105 629
- DE-A- 3 327 638
- GB-A- 2 115 425

## Beschreibung

Die Erfindung betrifft ein Verfahren zur Herstellung von mikroporösen Pulvern oder Formkörpern, insbesondere Membranen in Form von Flachfolien, Schlauchfolien oder Hohlfäden, aus Polyvinylidenfluorid und/oder Polyphenylensulfid und/oder Polysulfon und/oder Polyacrylnitril und/oder Ethylenvinylalkohol-Copolymer und/oder Ethylen-Chlortrifluorethylen-Copolymer und/oder Polyethersulfon und/oder Polyetherimid und/oder Polymethylmethacrylat und/oder Polycarbonat und/oder Cellulosetriacetat durch Phasenseparation mittels thermisch induzierter oder Nichtlöser induzierter Auslösung.

Trennwände, die flüssige Phasen oder Gasphasen voneinander trennen und dabei Austauschvorgänge ermöglichen, werden als Membranen bezeichnet, wobei diese selbst eigene Phasen sind, die aus anderen Substanzen als die zu trennenden Phasen aufgebaut sind. Membranen können flüssig oder fest sein. Im Rahmen der vorliegenden Erfindung werden feste Membranen aus synthetischen Polymeren betrachtet, wobei allgemein davon auszugehen ist, daß sich für deren Herstellung die Polymeren eignen, die auch für die Folien-Produktion brauchbar sind.

Folien sollen entsprechend ihren Anwendungszwecken undurchlässig für Gase oder Flüssigkeiten sein, während Membranen einen Stoffaustauch zwischen den durch die Membran getrennten Phasen ermöglichen. Die Anforderungen an die Permeabilität sind je nach Stoffaustauschtype, wie Osmose, Dialyse, Ultrafiltration, Elektrodialyse etc., unterschiedlich.

Zur Membranbildung über eine Polymerlösung wird in einem geeigneten Lösungsmittel entweder verdampft oder gegen ein Fällungsmittel ausgetauscht (Phasenseparation). Bei geeignetem System kann eine Phasenseparation auch durch Abkühlen erfolgen, wobei sich zunächst eine lösungsmittelreiche und eine lösungsmittelarme Phase bilden, woraus bei weiterer Abkühlung die lösungsmittelarme Phase fest wird. (DE-OS 27 37 745, DE-OS 28 33 493).

Bei dem Verfahren zur Herstellung von Poren aufweisenden Formkörpern gemäß DE-Patent 33 27 638 wurde bereits ein poröser Polyamid-6-Hohlfaden aus einem Gemisch aus Polyamid-6, ε-Caprolactam und Polyäthylenglykol 300 hergestellt. Die Verformung erfolgte bei einer Düsentemperatur von 210°C. Die Spinnlösung war homogen und dünnviskos und wurde deshalb in ein U-förmiges Abkühlrohr extrudiert, in dem die mechanische Belastung der Polymermischung bis zum Zeitpunkt der beginnenden Erstarrung gering gehalten wird.

In der GB-A-21 15 425 wird ein Verfahren zur Herstellung von porösen Formkörpern mit einstellbarem Gesamtporenvolumen, einstellbarer Porengröße und einstellbarer Porenwandung beschrieben, das dadurch gekennzeichnet ist, daß man ein Polymer durch Erwärmen über die obere kritische Temperatur T_{c} in einem Gemisch zweier, bei der Lösetemperatur flüssigen und mischbaren Verbindungen A und B löst, wobei das eingesetzte Gemisch Polymer, Verbindungen A und B im flüssigen Aggregatzustand eine Mischungslücke aufweist, die Verbindung A ein Lösemittel für das Polymer ist und die Verbindung B die Phasentrennungstemperatur einer Lösung, bestehend aus dem Polymer und der Verbindung A, heraufsetzt, die Lösung gegebenenfalls formt und durch Abkühlen zur Entmischung und Erstarrung bringt und die Komponenten A und/oder B gegebenenfalls extrahiert.

Hierbei werden insbesondere nicht-toxische Stoffe, wie etwa Speiseöle und Rizinusöl, als Verbindungen A und B zur Herstellung der porösen Körper verwendet.

Die EP-A-0 105 629 beschreibt ein Verfahren zur Herstellung von mikroporösen Flachmembranen nach dem Schmelzspinnverfahren, wobei das Endprodukt aus 30 - 80 Gew.% eines kristallisierbaren thermoplastischen Polymers und 70 bis 20 Gew.% einer Verbindung besteht, die mit besagtem thermoplastischen Polymer bei dessen Schmelztemperatur mischbar, bei Abkühlung unterhalb der Schmelztemperatur jedoch nicht mehr mischbar ist. Eine Verwendung von eta-Caprolactem ist in dieser Schrift nicht beschrieben.

Beim Loeb-Souriragan-Verfahren wird nach dem Gießen der Polymerlösung ein Anteil des Lösungsmittels zunächst verdampft und danach das Polymer durch Eintauchen der Lösung in ein Nichtlösungsmittel verfestigt. Hierzu sind deshalb niedrig siedende Lösungsmittel erforderlich. Als Lösungsmittel für die bekannte Membranbildungsreaktion wurden im allgemeinen aprotische Lösungsmittel, wie Dimethylformamid, Dimethylacetamid, N-Methylpyrrolidon, Dimethylsulfoxid, Dioxan, Aceton, Triäthylphosphat etc. oder Säuren wie z.B. Essigsäure oder Ameisensäure verwendet.

Durch eine geeignete Zusammensetzung der Polymerlösung läßt sich der gewünschte Membrantyp für den in Betracht gezogenen Stoffaustauschtyp erhalten.

Aufgabe der vorliegenden Erfindung war es, ein für die Membranbildung möglichst universell einsetzbares, gut zugängliches Lösungsmittel aufzufinden, das es auch möglich macht, bisher noch nicht in geeigneter Weise lösliche Polymere für die Membranbildung zu erschließen und ein Verfahren zur Herstellung von mikroporösen Pulvern oder Formkörpern, insbesondere Membranen in Form von Flachfolien, Schlauchfolien oder Hohlfäden, aus Polyvinylidenfluorid und/oder Polyphenylensulfid und/oder Polysulfon und/oder Polyacrylnitril und/oder Ethylenvinylalkohol-Copolymer und/oder Ethylen-Chlortrifluorethylen-Copolymer und/oder Polyethersulfon und/oder Polyetherimid und/oder Polymethylmethacrylat und/oder Polycarbonat und/oder Cellulosetriacetat durch Phasenseparation mittels thermisch induzierter oder Nichtlöser induzierter Auslösung zur Verfügung zu stellen.

Gelöst wird die Aufgabe durch ein Verfahren zur Herstellung von Membranen aus den synthetischen Polymeren durch Lösen des Polymeren in einem Gemisch, welches als wesentlichen lösenden Bestandteil ε-Caprolactam enthält, Verformen der Lösung und Auslösung der Phasenseparation.

Die Polymeren können Copolymere oder Gemische der genannten Polymeren sein.

ε-Caprolactam ist eine bei ca. 70°C schmelzende hygroskopische Substanz mit einem Siedepunkt (bei Normaldruck) von 268,5°C. Es ist in Wasser und zahlreichen organischen Lösungsmitteln, wie beispielsweise Toluol, Isopropanol, Glycerin, Polyäthylenglykol, Butyrolacton, Propylencarbonat, Aethylacetat, Methyläthylketon oder Cyclohexan gut löslich. Es wird großtechnisch in erheblichem Umfange hergestellt und bildet das Monomer für Polyamid-6-Polymere und ist deshalb preisgünstig zugänglich. Unter Ausschluß von Sauerstoff ist ε-Caprolactam thermisch stabil, wenn man davon absieht, daß es bei Temperaturen von 260 - 270°C in Gegenwart von Wasser unter Ringöffnung eine Polyaddition zum Polyamid-6 eingeht.

Aus seiner Verwendung als Monomer für Polyamid-6 sind die Eigenschaften von ε-Caprolactam gut bekannt. Ebenfalls gut bekannt ist die Rückgewinnung von ε-Caprolactam aus wäßrigen Lösungen.

ε-Caprolactam ist eine sehr wenig toxische Substanz. Man ist der Ansicht, daß beim Umgang mit ε-Caprolactam, abgesehen von der Belästigung durch den bitteren Geschmack und einer möglichen Schleimhautreizung durch ε-Caprolactam-Pulver auch bei wiederholter Einwirkung keine Gesundheitsgefahr besteht. Wegen der guten Löslichkeit, lassen sich eventuelle Reste vollständig aus den mit ε-Caprolactam gebildeten Membranen entfernen.

Als weitere Bestandteile der Lösung kommen Anteile von latenten Lösungsmitteln, Verdickern, Nichtlösern und Hilfsstoffen infrage. Unter latenten Lösungsmitteln werden im Rahmen der vorliegenden Erfindung solche Stoffe verstanden, die das membranbildende Polymer nur schlecht oder bei erhöhter Temperatur lösen. Beispiele für solche latenten Lösungsmittel sind Butyrolacton oder Propylencarbonat, Polyalkylenglykole, wobei diese je nach der Polymerart unterschiedlich wirksam sein können. Die Menge an latenten Lösungsmitteln richtet sich nach dem eingesetzten Polymeren und der angestrebten Membrantype. Sein Anteil am Lösungsgemisch kann bis zu 80 Gew.-% betragen.

Unter Verdickern werden solche Stoffe verstanden, die die Viskosität der Lösung erhöhen. Beispiele für Verdicker bei den hier betrachteten Lösungen sind Polyvinylpyrrolidon, Polyäthylenglykol, Polyacrylsäure und Polyacrylate, wobei sie in einer Menge von höchstens 10 Gew.-% zugesetzt werden.

Nichtlöser im Rahmen der vorliegenden Erfindung sind je nach Polymerart beispielsweise Wasser, Glycerin, Triacetin, Äthyllactat, Dioctyladipat, Rizinusöl und Polyäthylenglykol. Dem Lösungsgemisch werden sie höchstens in einer solchen Menge zugesetzt, daß sich noch eine homogene Mischung mit dem Polymeren ausbildet.

Hilfsstoffe im Rahmen der vorliegenden Erfindung sind übliche Stabilisatoren, Nucleierungsmittel, Pigmente u.ä. Deren Anteil übersteigt nicht 1 Gew.-% des Lösungsgemisches.

Vorzugsweise erfolgt das Lösen des Polymeren bei Temperaturen von 60 - 240°C.

Vorzugsweise wird ein Lösungsgemisch verwendet, welches 20 bis 65 Gew.-% ε-Caprolactam enthält, gelöst.

Zur Ausbildung des Lumens von Hohlfäden werden in den allermeisten Fällen üblicherweise Innenflüssigkeiten angewendet. Je nach Auswahl der Innenflüssigkeit, kann diese sich bei der vorliegenden Erfindung auch auf die Struktur der der Innenwand benachbarten Zone auswirken. Dabei spielen die Verarbeitungstemperatur, die Charakteristik der Löser-Nichtlösereigenschaft und die Mischbarkeit mit dem Lösungsmittelgemisch eine wichtige Rolle.

Es ist bei der vorliegenden Erfindung möglich, in einer mit Nichtlöserdämpfen beaufschlagten Klimakammer die verformte Lösung in die feste Phase zu überführen.

In Ausgestaltung der Erfindung ist es außerdem möglich, bei ausreichender Verweilzeit, die Überführung in die feste Phase nach Unterkühlung durch spontane Kristallisation des Lösungsmittelgemisches zu bewirken.

Die Überführung in die feste Phase erfolgt im allgemeinen durch Koagulation der verformten Lösung in einem Nichtlöserbad. In weiterer Ausgestaltung der Erfindung erfolgt die Überführung in die feste Phase durch Koagulation in einem Nichtlöserbad, wobei die Temperatur der Lösung und die Temperatur des Nichtlöserbades 40 - 60°C beträgt.

In einer besonderen Ausführungsform der Erfindung erfolgt die Überführung in die feste Phase dadurch, daß ein Lösungsgemisch aus ε-Caprolactam, latentem Lösungsmittel und einem Nichtlöser, gegebenenfalls einem Verdicker und Hilfsstoffen verwendet wird, welches bei erhöhter Temperatur mit dem Polymeren eine homogene Phase bildet und diese homogene Phase nach Abkühlung auf eine niedrigere, Temperatur zwei getrennte flüssige Phasen bildet, daß man die homogene Phase aus Polymer und Lösungsgemisch so abkühlt, daß zunächst eine Entmischung in zwei flüssige Phasen eintritt, bevor die Verfestigung des Polymeren zu einer Membran erfolgt.

Mikroporöse Pulver und Formkörper aus Polyphenylensulfid konnten bisher wegen der schwierigen Löslichkeit des Polymeren nicht hergestellt werden. Das erfindungsgemäße Verfahren ermöglicht nunmehr auch die Herstellung von mikroporösen Polyphenylensulfidprodukten. Polyphenylensulfid ist beständig gegen die meisten organischen und anorganischen Säuren, wäßrige Alkalien, Amine, Kohlenwasserstoffe, Aldehyde, Ketone, Nitrile, Nitrobenzol, Alkohole, Phenole, andere organische Lösungsmittel und wäßrige Lösungen anorganischer Salze. Erst oberhalb 200°C löst sich Polyphenylensulfid beispielsweise in 1-Chlornaphtalin auf. Beständig gegenüber thermischen Beanspruchungen ist Polyphenylensulfid bis zu ca. 260°C.

Überall dort, wo extreme chemische und/oder thermische Beanspruchungen auftreten, läßt sich Polyphenylensulfid mit Vorteil einsetzen.

In anderen Fällen, bei denen es auf chemische und thermische Beständigkeit ankommt, lassen sich erfindungsgemäße hergestellte Membranen einsetzen, bei denen das Polymer ein Polysulfon ist. Insbesondere sind dabei Polyäthersulfone besonders bevorzugte Polymere. Weitere chemisch besonders beständige Polymere, die dem erfindungsgemäßen Verfahren zugänglich sind, sind Polyvinylidenfluorid und Ethylen-Chlortrifluorethylen-Copolymere.

Nach dem zuvor beschriebenen Verfahren können u.a. Membranen aus synthetischen Polymeren hergestellt werden, die sich für die Ultrafiltration und Mikrofiltration eignen. Sofern keine toxisch relevanten Stoffe im Lösungsmittelgemisch enthalten sind, können nach dem erfindungsgemäßen Verfahren Membranen erhalten werden, die im Lebensmittelbereicch eingesetzt werden können.

Schließlich ist mit dem erfindungsgemäßen Verfahren auch die Herstellung von mikroporösen Pulvern oder Formkörpern möglich, die zur geregelten Wirkstoffabgabe (controlled-release) geeignet sind.

Die Erfindung wird anhand der nachfolgenden Beispiele näher erläutert.

### Beispiel 1

Aus 15 Gew.-Teilen handelsübliches Polyäthersulfon (Victrex 5200 der Fa. ICI) und 77,5 Gew.-Teilen einer Mischung bestehend aus Caprolactam/Butyrolacton/Glycerin im Gewichtsverhältnis 45,87 : 45,87 : 8,26 sowie 7,51 Gew.-Teilen des Verdickungsmittels Polyvinylpyrrolidon wurde bei ca. 110°C eine homogene viskose Lösung gebildet (ca. 28 PaS/20°C).

Nach dem Entgasen und der Abkühlung auf die Spinntemperatur von 40°C wurden aus dieser Lösung mittels einer Hohlfadendüse unter Verwendung einer flüssigen Innenfüllung Hohlfäden mit unterschiedlichen Wanddicken ausgeformt und sofort in einem auf 40°C temp. Wasserbad verfestigt. Nach einer Verweilzeit von ca. 10 - 15 sec im Wasserbad waren die Hohlfäden stabilisiert. Die Extraktion der Lösungsmittel geschah durch Wäsche mit 80°C warmen Wasser. Der Trocknung bei ca. 50°C war eine Extraktionspassage mit Isopropanol vorgeschaltet.

Die mikroskopische Begutachtung der verschiedenen Kapillardimensionen zeigte bei allen Varianten im Außenbereich der Membran eine ca. 50 - 100 µm dicke feinporige nach Außen offene Struktur, die zur Membranmitte in ein zunehmend großporiges Gefüge überging. Zur Lumenseite verdichten sich die Zellen wieder und bildeten eine offenporige Innenoberfläche aus.

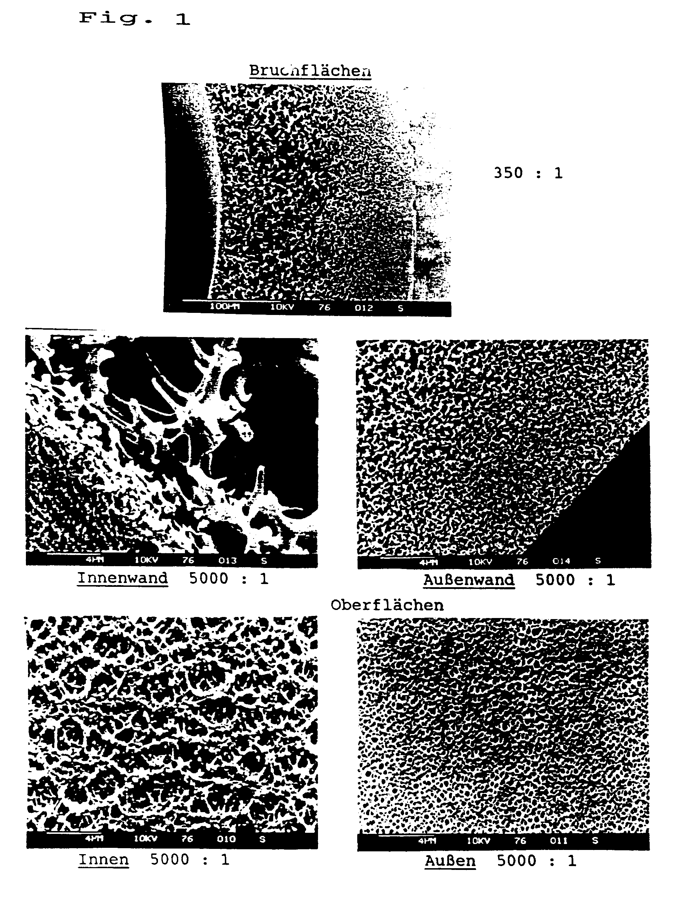

Die Figur 1 zeigt REM-Aufnahmen der erhaltenen Membran

In der Tabelle 1 sind die Transmembranflüsse verschiedener Hohlfäden mit unterschiedlicher Wanddicke gegenübergestellt.

**Tabelle 1**

| Hohlfäden mit 1,0 mm Innendurchmesser | | | | | |
|---|---|---|---|---|---|
| | Dimension | | Wanddicke mm | max.Pore µm | Transmembranfluß Wasser l/m²·h·bar |
| | dᵢ mm | dₐ mm | | | |
| A | 1,0 | / 1,28 | 0,14 mm | ∼ 0,25 µm | 5972 |
| B | 1,0 | / 1,43 | 0,215 mm | ∼ 0,25 µm | 5532 |
| C | 1,0 | / 1,51 | 0,255 mm | ∼ 0,25 µm | 4805 |
| D | 1.0 | / 1,56 | 0,28 mm | ∼ 0,25 µm | 4362 |
| E | 1,0 | / 1,78 | 0,39 mm | ∼ 0,25 µm | 4572 |
| F | 1,0 | / 1,90 | 0,45 mm | ∼ 0,25 µm | 4000 |
| G | 1,0 | / 2,18 | 0,59 mm | ∼ 0,25 µm | 4000 |
| H | 1,0 | / 2,34 | 0,67 mm | ∼ 0,25 µm | 4452 |

### Beispiel 2:

Eine Mischung aus 11,25 Gew.-Teilen des in Beispiel 1 verwendeten Polyäthersulfons und 3,75 Gew.-Teilen eines handelsüblichen sulfonierten Polyäthersulfons wurde in Caprolactam/Butyrolacton/Glycerin im Gew.-Verhältnis 48 : 48 : 6 gelöst. Die im übrigen nach der in Beispiel 1 beschriebenen Methode hergestellten Hohlfäden waren sofort wasserbenetzbar. Sie können ohne Hydrophilierung z.B. mit Alkohol für die Filtration von wäßrigen oder anderen hydrophilen Medien eingesetzt werden.

### Beispiel 3:

Die nach Beispiel 1 hergestellte Polymerlösung wurde bei Raumtemperatur mittels eines Reverse-Roll-Coaters auf ein Trägerband aufgestrichen und unmittelbar in einem 50°C warmen Wasserbad verfestigt. Die entstandene Flachmembran wurde in Wasser gewaschen und zwischen 90 - 40°C getrocknet.

Die wasserbenetzbare Flachmembran hatte folgende Testwerte:
Membrandicke: O,15 mm
Transmembranfluß 6,5 ml/cm² · Min · bar
gemessen mit Isopropanol
Transmembranfluß ca.8000 l/m² · h · bar
gemessen mit Wasser

### Beispiel 4:

Ein handelsübliches Polyäthersulfon wurde in den in Beispiel 1 angegebenen Lösungsgemisch zu einer
17 Gew.-%igen Lösung gelöst und zu einem Hohlfaden mit einem Außendurchmesser von 1,0 mm und einer Wanddicke von 0,2 mm ausgeformt.

Der erhaltene, mechanisch sehr stabile Hohlfaden hatte einen Transmembranfluß mit Wasser von 4000 l/m² · h · bar bei einer maximalen Porengröße von < 0,25 µm.

### Beispiel 5:

Eine 15 Gew.-%ige Poyläthersulfonlösung in 17 Gew.-Teilen Caprolactam und 82,5 Gew.-Teilen Propylencarbonat mit einem Zusatz von 8,2% Verdicker wurde zu Hohlfäden versponnen. Der relativ geringe Caprolactamanteil verursachte eine sehr langsame Stabilisierung des Fadens. Erst nach einer Verweilzeit von ca 1 Min war der Hohlfaden soweit verfestigt, daß er mit Wasser extrahiert werden konnte.

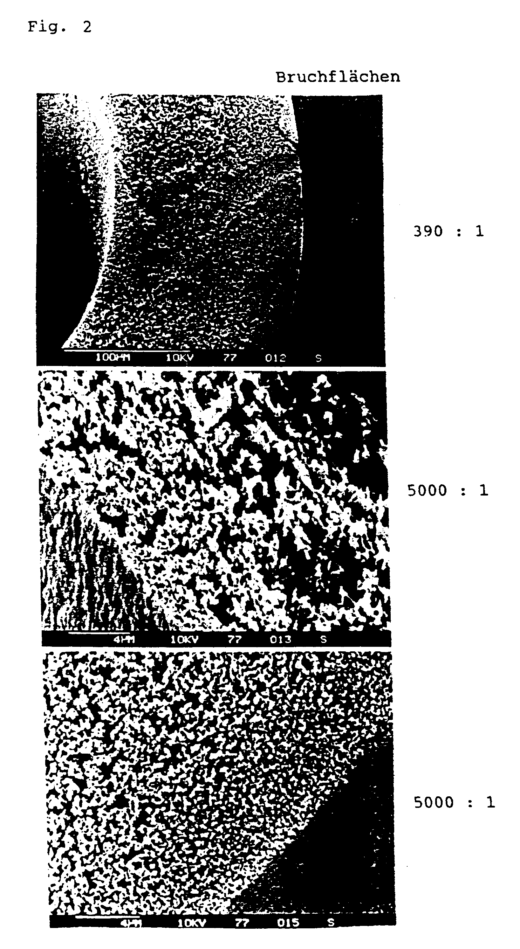

Es entstand eine wasserdurchlässige Membran mit asymmetrischer Struktur im Wandquerschnitt. Der Transmembranfluß betrug 5000 l/m² · h · bar. REM-Aufnahmen der erhaltene Membran zeigt die Figur 2.

### Beispiel 6:

Auf eine kalte Glasplatte wurde eine ca. 40°C warme Lösung bestehend aus 15 Gew.-Teilen Polyäthersulfon gelöst in 66,75 Gew.-Teilen Caprolactam, 21,25 Gew.-Teilen Butyrolacton und 11 Gew.-Teilen Glycerin ausgestrichen. Beim Abkühlen der Lösung kristallisierte das Lösungsmittel und stabilisierte so die ausgebildete Membran. Nach Extraktion mittels Wasser entstand eine offenporige, durchlässige Membran.

### Beispiel 7:

In einem beheizbaren Rührgefäß wurden 22,5 Gew.-% Polyvinylidenfluorid (PVDF) mit einem Mol.-Gew. von 226 · 10³ (KYNAR 700) in einem Lösungsmittelgemisch, bestehend aus Caprolactam, Butyrolacton und Dioctyladipat im Gewichtsverhältnis von 18,75 : 18,75 : 62,5 bei einer Temperatur von ca. 165°C homogen gelöst. Beim Abkühlen eines Teiles der Lösung konnte eine Phasentrennungstemperatur von 141°C, und eine Erstarrungstemperatur der polymerreichen Phase von 90°C, ermittelt werden. Die Hauptmenge der Lösung wurde zu Röhrchen ausgeformt. Nach Extraktion mittels warmen Isopropanol entstand ein offenporiger, poröser Formkörper mit einer max. Porengröße von 0,60 µm und einer guten Permeabilität für Isopropanol.

### Beispiel 8:

In einer kontinuierlich arbeitenden Mischanlage wurde unter Druck (3 Bar) eine Polymerschmelze aus Polyvinylidenfluorid (PVDF) mit einem Mol.-Gewicht von 434 · 10³ in dem Lösungsmittelgemisch gemäß Beispiel 7 bei ca. 185°C gelöst. Die 27 Gew.%-ige Lösung wurde einer Hohlfadendüse zugeführt und unter Zuhilfenahme einer flüssigen Innenfüllung zu Hohlfadenmembranen ausgeformt und in einem Wasserbad (20°C) abgekühlt. Durch thermisch induzierte Phasentrennung verfestigte sich nach Unterschreitung der Phasentrennungstemperatur und Erstarrungstemperatur der polymerreichen Phase die Membran und konnte mit Isopropanol extrahiert werden.
Die so hergestellten Hohlfäden der Dimension 1,00 mm Innendurchmesser und einer Wanddicke von 0,25 mm hatten offenporige Oberflächen. Die max. Porengröße betrug 0,47 µm. Der Transmembranfluß (mit Isopropanol) war 6,5 ml/cm · Min · bar.

### Beispiel 9:

20 Gew.-Teile eines Ethylen-Vinylalkohol Copolymers (Soarnol DT) mit einem Ethylengehalt von 29 Mol.-% (Dichte 1,21 g/cm³) und 36 Gew.-Teile Caprolactam sowie 44 Gew.-Teile Polyäthylenglykol Mol.-Gew. 600 wurden bei ∼ 180°C gelöst. Die auf 160°C temperierte Lösung wurde mit einer Rakel auf ein Trägerband aufgestrichen und in einem Wasserbad abgekühlt. Die Phasentrennungs- bzw. Erstarrungstemperatur der polymerreichen Phase der Lösung betrug 140°C bzw. 115°C.
Nach Extraktion mit 60°C warmen Wasser und Isopropanol sowie einer anschließenden Trocknung konnte eine wasserbenetzbare, offenporige Flachmembran erhalten werden.
Die mikroskopische Begutachtung zeigte eine gleichmäßige, über dem Membranquerschnitt leicht asymmetrische Porenstruktur.

### Beispiel 10:

Bei 120°C wurde eine 15 Gew.%-ige Lösung eines Polyätherimids (Ultem 1000) in 60 Gew.-Teilen Caprolactam und 40 Gew.-Teilen Propylencarbonat (gelöst bei ∼ 200°C) zur Flachmembran ausgeformt. Nach Unterschreitung der Phasentrennungstemperatur (^{∼} 90°C) könnte die Membran mit Wasser auskoaguliert und anschließend extrahiert werden. Es entstand eine sehr permeable Struktur, die sofort mit Alkohol durchgehend benetzt werden konnte.

### Beispiel 11:

In einer Lösungsmittelmischung aus Caprolactam, Butyrolacton und Glycerin in einem Gewichtsverhältnis von 47 : 47 : 6 wurden 15 Gew.-% Polysulfon (Ultrason 200) in einem Rührgefäß bei 150°C gelöst. Es bildete sich nach Abkühlen und Entgasen bei Raumtemperaturen eine klare, leicht gebliche, viskose Lösung. Mit einem Reverse-Roll-Coater wurde die Lösung auf ein Trägerband aufgestrichen und die Flachmembran in Wasser koaguliert. Die gebildete Membran zeigte nach Extraktion eine offenporige Struktur mit Porengroßen für den Einsatz zur Mikrofiltration.

### Beispiel 12:

Eine bei 180°C hergestellte 20 Gew.%-ige Lösung von Polyethylenterephthalat (rel. Viskosität 1,63) in Caprolactam/Butyrolacton (Gew.-Verhältnis 2 : 1 ) wurde auf eine Glasplatte aufgestrichen und in Wasser verfestigt. Bei etwa 155°C konnte eine Phasentrennung der homogenen Lösung beobachtet werden. Nach Extraktion in Isopropanol erhielt man eine offenporige, durchlässige, stabile Membran.

### Beispiel 13:

In einem Glaskolben wurden 16 Gew.-Teile Polyacrylnitril-Pulver, 42 Gew.-Teile Caprolactam und 42 Gew.-Teile Butyrolacton eingewogen. Unter Rühren bildete sich bei ca. 80 - 100°C eine homogene, viskose Lösung die sich beim Abkühlen bei ca. 35 - 40° durch Phasentrennung verfestigte. Die Verformung zur Flachmembran geschah bei ca. 60°C. Nach Koagulation der Lösung und Extraktion der Lösemittel durch Wasser entstand eine poröse Membran.

### Beispiel 14:

Bei ca. 120°C wurde eine 17 Gew.%-ige Polymethylmethacrylat-Lösung (Typ PMMA-HW55) in 76 Gew.-Teilen Caprolactam und 24 Gew.-Teilen Rizinusöl auf eine Glasplatte aufgestrichen und mit Wasser verfestigt. (Phasentrennungstemperatur der Lösung: 90°C; Erstarrungstemperatur der polymerreichen Phase: 60°C). Nach Extraktion der Lösemittel in Wasser und Isopropanol erhielt man eine offenporige Membran. Die Polymersteifigkeit führt zu Membranen mit geringen Dehnungswerten.

### Beispiel 15: Polycarbonat - Pulver

17Gew.-% Polycarbonat (Fa. Bayer Type SCL 2579/3) wurden bei 130°C in Caprolactam aufgelöst. Unter Rühren wurde die Losung etwa auf die Kristallisationstemperatur des Lösemittels von ca. 70°C abgekühlt in warmes Wasser eingebracht und mit einem schnell-laufenden Rührwerk die entstandenen Membranpartikel extrahiert. Nach Extraktion in Wasser erhielt man ein poröses Pulver, welches nach Beladung mit Wirkstoffen sich hervorragend zur geregelten Wirkstoffabgabe (Controlled Release) eignet.

## Patentansprüche

1. Verfahren zur Herstellung von mikroporösen Pulvern oder Formkörpern, insbesondere Membranen in Form von Flachfolien, Schlauchfolien oder Hohlfäden, aus Polyvinylidenfluorid und/oder Polyphenylensulfid und/oder Polysulfon und/oder Polyacrylnitril und/oder Ethylenvinylalkohol-Copolymer und/oder Ethylen-Chlortrifluorethylen-Copolymer und/oder Polyethersulfon und/oder Polyetherimid und/oder Polymethylmethacrylat und/oder Polycarbonat und/oder Cellulosetriacetat durch Phasenseparation mittels thermisch induzierter oder Nichtlöser induzierter Auslösung, dadurch gekennzeichnet, daß eine Lösung des Polymeren in einem Gemisch, welches als wesentlichen lösenden Bestandteil ε-Caprolactam enthält, hergestellt wird, die Lösung verformt und die Phasenseparation ausgelöst wird.

2. Verfahren nach Anspruch 1, dadurch gekennzeichnet, daß das Gemisch wenigstens 10 Gew.-% ε-Caprolactam enthält.

3. Verfahren nach Anspruch 2, dadurch gekennzeichnet, daß das Gemisch 20 - 65 Gew.-% ε-Caprolactam enthält.

4. Verfahren nach einem oder mehreren der Ansprüche 1 bis 3, dadurch gekennzeichnet, daß das Lösen des Polymeren bei Temperaturen von 60 bis 240°C erfolgt.

5. Verfahren nach einem oder mehreren der Ansprüche 1 bis 4, dadurch gekennzeichnet, daß die Überführung in die feste Phase nach Unterkühlung spontan durch Kristallisation des Lösungsmittelgemisches bewirkt wird.

6. Verfahren nach einem oder mehreren der Ansprüche 1 bis 4, dadurch gekennzeichnet, daß die Phasenseparation durch Koagulation in einem Nichtlöserbad ausgelöst wird.

7. Verfahren zur Herstellung von Membranen nach einem oder mehreren der Ansprüche 1 bis 6, dadurch gekennzeichnet, daß ein Lösungsgemisch aus ε-Caprolactam, latentem Lösungsmittel und einem Nichtlöser, gegebenenfalls einem Verdicker und Hilfsstoffen verwendet wird, welches bei erhöhten Temperaturen mit dem Polymeren eine homogene Phase bildet und diese homogene Phase nach Abkühlung auf eine niedrigere Temperatur zwei getrennte flüssige Phasen bildet, daß man die homogene Phase aus Polymer und Lösungsgemisch so abkühlt, daß zunächst eine Entmischung in zwei flüssige Phasen eintritt, bevor die Verfestigung des Polymeren zu einer Membran erfolgt.

## Claims

1. A process for the preparation of microporous powders or articles, in particular membranes in the form of flat films, tubular films or hollow threads, from polyvinylidene fluoride and/or polyphenylene sulphide and/or polysulphone and/or polyacrylonitrile and/or ethylene/vinyl alcohol copolymer and/or ethylene/chlorotrifluoroethylene copolymer and/or polyether sulphone and/or polyether imide and/or polymethyl methacrylate and/or polycarbonate and/or cellulose triacetate by phase separation, the release of which is induced thermally or by means of non-solvents, characterised in that a solution of the polymer in a mixture containing ε-caprolactam as essential dissolving component is prepared, the solution is shaped and phase separation is released.

2. A process according to Claim 1, characterised in that the mixture contains at least 10% by weight of ε-caprolactam.

3. A process according to claim 2, characterised in that the mixture contains from 20 - 65% by weight of ε-caprolactam.

4. A process according to one or more of Claims 1 to 3, characterised in that the polymer is dissolved at temperatures of from 60 to 240°C.

5. A process according to one or more of Claims 1 to 4, characterised in that conversion into the solid phase is brought about spontaneously by crystallisation of the solvent mixture after super-cooling.

6. A process according to one or more of Claims 1 to 4, characterised in that phase separation is released by coagulation in a bath of non-solvent.

7. A process for the preparation of membranes according to one or more of Claims 1 to 6, characterised in that a solvent mixture of ε-caprolactam, latent solvent and a non-solvent, optionally a thickener and auxiliary substances is used which forms a homogeneous phase with the polymer at elevated temperatures and this homogeneous phase forms two separate liquid phases after cooling to a lower temperature, and in that the homogeneous phase of polymer and solvent mixture is cooled so that separation into two liquid phases initially takes place before the polymer solidifies to a membrane.

## Revendications

1. Procédé de fabrication de poudres microporeuses ou de corps façonnés microporeux, en particulier de membranes en forme de feuilles planes, de feuilles tubulaires ou de fibres creuses, en poly(fluorure de vinylidène) et/ou poly(sulfure de phénylène) et/ou polysulfone et/ou polyacrylonitrile et/ou copolymère ethylène/alcool vinylique et/ou copolymère éthylène/chlorotrifluoroéthylène et/ou poly(éther sulfone) et/ou poly(éther imide) et/ou poly(méthacrylate de méthyle) et/ou polycarbonate et/ou triacétate de cellulose, par séparation de phases dont le déclenchement est provoqué thermiquement ou par un non-solvant, caractérisé en ce qu'on prépare une solution du polymère dans un mélange qui contient de l'epsilon-caprolactame en tant que principal constituant solvant, on donne une forme à la solution et on déclenche la séparation de phases.

2. Procédé selon la revendication 1, caractérisé en ce que le mélange contient au moins 10 % en poids d'epsilon-caprolactame.

3. Procédé selon la revendication 2, caractérisé en ce que le mélange contient de 20 à 65 % en poids d'epsilon-caprolactame.

4. Procédé selon une ou plusieurs des revendications 1 à 3, caractérisé en ce que la dissolution du polymère est effectuée à des températures de 60°C à 240°C.

5. Procédé selon une ou plusieurs des revendications 1 à 4, caractérisé en ce que la transformation en la phase solide, après la surfusion, est provoquée spontanément par la cristallisation du mélange solvant.

6. Procédé selon une ou plusieurs des revendications 1 à 4, caractérisé en ce que la séparation de phases est déclenchée par coagulation dans un bain de non-solvant.

7. Procédé de fabrication de membranes, selon une ou plusieurs des revendications 1 à 6, caractérisé en ce que l'on utilise un mélange solvant constitué d'epsilon-caprolactame, d'un solvant latent et d'un non-solvant, ainsi que, le cas échéant, d'un épaississant et d'adjuvants, mélange qui, à température élevée, forme avec le polymère une phase homogène qui, après refroidissement à une température plus basse, donne deux phases liquides séparées, et en ce qu'on refroidit la phase homogène constituée du polymère et du mélange solvant, de manière qu'ait lieu d'abord une démixtion en deux phases liquides, avant qu'ait lieu la solidification du polymère en une membrane.
